# EUROPEAN PATENT APPLICATION

(11) **EP 4 625 298 A1**
(43) Date of publication of application: **01.10.2025**
(21) Application number: 25165900.9
(22) Date of filing: 25.03.2025
(51) Int. Cl.: G06Q 30/0207, G06Q 30/0241, G06Q 30/0272

(54) **CASH HANDLING SYSTEM AND CASH HANDLING METHOD**

(30) Priority: 28.03.2024 JP 2024053252
(71) Applicant: GLORY LTD., Himeji-shi Hyogo 670-8567 (JP)
(72) Inventor: Oe, Takahiro, Hyogo, 670-8567 (JP); Tagashira, Kenichi, Hyogo, 670-8567 (JP)
(74) Representative: SSM Sandmair

(57) **Abstract**

A cash handling system for performing cash handling for a customer with a service fee charged to the customer, includes: a display unit configured to display a selection screen for selecting an advertisement from among a plurality of types of advertisements; an operation unit configured to accept a selection operation performed by the customer on the selection screen; and a control unit configured to reduce the service fee for the cash handling according to an advertisement selected based on the selection operation.

## Description

### TECHNICAL FIELD

The present disclosure relates to a cash handling system and a cash handling method for performing cash handling with a service fee obtained from a customer.

### BACKGROUND ART

Conventionally, various types of cash handling systems have been used in stores. For example, there is a system of accepting deposit of cash in a cash handling apparatus, and issuing a predetermined valuable medium such as a coupon that can be used for payment in a store. The cash handling apparatus can handle a large amount of coins brought from home by a customer. When a customer has deposited coins to the cash handling apparatus, a coupon equivalent to a coupon amount obtained by subtracting a service fee from the deposit amount is issued from the cash handling apparatus. When purchasing an item in the store, the customer can use the coupon to apply the coupon amount to the payment for the item.

Even in a case where customers need to pay service fees f or cash handing, if the store invites a sponsor company to place a n advertisement and obtains an advertisement fee from the sponsor company, the store can discount the service fee for the customer h aving viewed the advertisement. For example, Japanese Laid-Open P atent Publication No. 2004-86679 discloses a system in which a scr een for selecting whether or not to view an advertisement is displ ayed on a cash handling apparatus, and a customer who selects to v iew the advertisement is given a reduction in the service fee.

### SUMMARY

In the conventional system, although the service fee regarding the cash handling is reduced, another burden may be imposed on the customer. For example, since the customer has only two choices, i.e., to view or not to view the advertisement, the customer having selected to view the advertisement has to keep viewing the advertisement even if he/she is not interested in the advertisement.

The present disclosure has been made in view of the above problems, as well as other problems, in the conventional art, and the present disclosure addresses these issues, as discussed herein, with a cash handling system and a cash handling method capable of changing an advertisement to be shown to a customer, based on a selection by the customer.

A cash handling system according to one aspect of the present disclosure performs cash handling for a customer with a service fee obtained from the customer. The cash handling system includes: a display unit configured to display a selection screen for selecting an advertisement from among a plurality of types of advertisements; an operation unit configured to accept a selection operation performed by the customer on the selection screen; and a control unit configured to reduce the service fee for cash handling according to an advertisement selected based on the selection operation.

A cash handling system according to one aspect of the present disclosure performs cash handling for a customer and charges a service fee for the cash handling to the customer. The cash handling system includes: a display unit configured to display a selection screen for selecting an advertisement from among a plurality of types of advertisements; an operation unit configured to accept a selection operation performed by the customer, on the selection screen; and a control unit configured to reduce the service fee for the cash handling according to an advertisement selected based on the selection operation.

In the above configuration, the advertisements that the display unit displays on the selection screen may include advertisements having different playback periods, and the control unit may reduce, from the service fee, a monetary amount according to the playback period of the advertisement selected on the selection screen.

In the above configuration, the advertisements that the display unit displays on the selection screen may include advertisements of different companies.

In the above configuration, the control unit may reduce the service fee by issuing a coupon that can be used for payment for an item price equivalent to reduction of the service fee.

In the above configuration, the coupon may be a coupon that can be used for purchase of an item of a company selected on the selection screen.

In the above configuration, the control unit may determine whether or not the customer is viewing an advertisement being played, and change the amount of reduction in the service fee, based on a result of the determination.

In the above configuration, the control unit may stop playback of the advertisement upon determining that the customer is not viewing the advertisement being played.

In the above configuration, the control unit may change the types of advertisements to be displayed on the selection screen, based on information on an attribute of the customer who views the advertisements.

A cash handling method according to the present disclosure is performed by a cash handling system that performs cash handling for a customer and charges a service fee for the cash handling to the customer. The cash handling method includes: displaying, on a display unit, a selection screen for selecting an advertisement from among a plurality of types of advertisements; accepting, via an operation unit, a selection operation performed by the customer on the selection screen; and reducing the service fee for the cash handling according to an advertisement selected based on the selection operation.

According to the cash handling system and the cash handling method of the present disclosure, when an advertisement is shown to a customer to reduce a service fee for cash handling, the type of the advertisement to be shown to the customer can be changed according to a request of the customer.

### BRIEF DESCRIPTION OF THE DRAWINGS

FIG. 1 is a schematic diagram illustrating an outline of a cash handling system according to the present embodiment;
FIG. 2 is a schematic cross-sectional view illustrating an example of an internal configuration of the cash handling apparatus;
FIG. 3 is a block diagram showing an example of a configuration of the cash handling apparatus;
FIG. 4 is a flowchart showing an example of a flow of a process performed by the cash handling apparatus;
FIGS. 5A and 5B show an example of a selection screen displayed on an operation/display unit of the cash handling apparatus;
FIGS. 6A and 6B show an example of a screen displayed on the operation/display unit during a viewing leading process;
FIGS. 7A and 7B show another example of the advertisement selection screen;
FIGS. 8A and 8B show still another example of the advertisement selection screen;
FIGS. 9A and 9B illustrate another example of the viewing leading process; and
FIGS. 10A and 10B illustrate still another example of the viewing leading process.

### DESCRIPTION OF EMBODIMENT

Hereinafter, an embodiment of a cash handling system and a cash handling method according to the present disclosure will be described with reference to the accompanying drawings. The type and installation place of a cash handling apparatus constituting the cash handling system are not particularly limited. In this embodiment, the description will be continued for the case where, as one example, a cash handling apparatus installed in a store where transactions with customers are performed, and the cash handling apparatus accepts deposit of cash from a customer and issues a valuable medium according to the deposit amount.

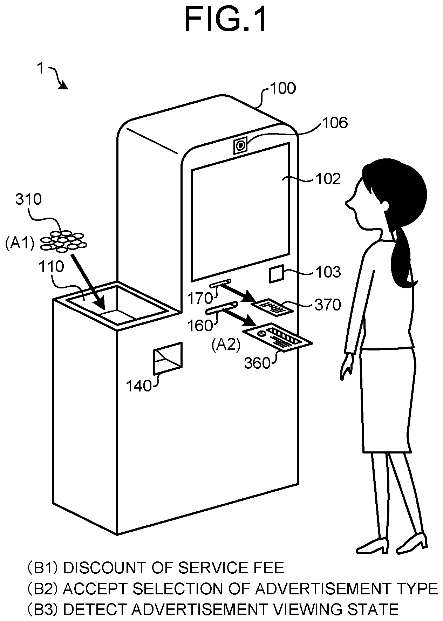

FIG. 1 is a schematic diagram illustrating an outline of a cash handling system 1 according to the present embodiment. The cash handling system 1 includes a cash handling apparatus 100 that issues a predetermined valuable medium in exchange for cash received from a customer in the store. The value of the valuable medium is equivalent to a monetary amount obtained by subtracting a service fee from the amount of the cash received in the cash handling apparatus 100 from the customer. The valuable medium, which can be issued by the cash handling apparatus 100, includes a coupon that the customer can use to pay for the amount of a transaction with the store. The valuable medium may be referred to as a discount coupon, an exchange ticket, a gift certificate, a meal coupon, etc. The kind of the valuable medium is not particularly limited. In the present embodiment, the valuable medium is referred to as a coupon. The cash handled by the cash handling system 1 may be banknotes, coins, or both banknotes and coins. Hereinafter, the description will be continued with coins being an example of cash.

As shown in FIG. 1, the customer deposits coins 310 from a depositing unit 110 of the cash handling apparatus 100 (A1). The cash handling apparatus 100 recognizes and counts the coins 310 accepted in the depositing unit 110, and calculates a deposit amount. If foreign materials and/or coins that cannot be recognized are mixed with the coins 310, they are returned to the customer from a return unit 140. The cash handling apparatus 100 stores the coins 310 therein. The cash handling apparatus 100 displays the deposit amount and the service fee on an operation/display unit 102.

The cash handling apparatus 100 can display an advertisement on the operation/display unit 102, and reduce the service fee on condition that the customer has viewed the advertisement (B1). The type, format, etc., of the advertisement displayed on the cash handling apparatus 100 is not particularly limited. For example, the advertisement may consist of a still image, or a moving image. The advertisement may or may not include sound. Hereinafter, the description will be continued for the case where the advertisement consists of a moving image with sound. Here, the "sound" includes at least one of voice and music.

The cash handling apparatus 100 can accept a selection of an advertisement type from the customer (B2). A plurality of types of advertisements selectable in the cash handling apparatus 100 include at least either advertisements having different playback periods or advertisements having different contents. Specifically, advertisements having different durations of time and/or advertisements for different items or different companies may be selectable in the cash handling apparatus 100.

The customer can select an advertisement playback period. For example, a plurality of advertisements having different playback periods such as an advertisement to be played for 15 seconds and an advertisement to be played for 30 seconds, are prepared in advance, for the cash handling apparatus 100. Additionally, service fee reduction methods corresponding to the playback periods of these advertisements are set in advance.

The customer can select an advertisement content. For example, advertisements for different companies such as an advertisement for company A and an advertisement for company B, are prepared in advance, for the cash handling apparatus 100. Additionally, service fee reduction methods corresponding to the respective advertisements having been viewed by the customer are set in advance. For another example, advertisements for different items of the same company such as an advertisement for an item X and an advertisement for an item Y, for company A, and service fee reduction methods corresponding to the respective advertisements viewed by the customer, may be set in advance.

The customer can select and view an advertisement from among the plurality of types of advertisements. When the customer has selected an advertisement, the cash handling apparatus 100 displays the selected advertisement on the operation/display unit 102. For example, a moving image of the advertisement including video and sound is played. By viewing the advertisement played on the operation/display unit 102, the customer can receive a reduction in the service fee based on the reduction method set for the advertisement. The advertisement may not necessarily be played on the operation/display unit 102, and may be played on another display included in the cash handling apparatus 100, or may be played using a display device installed independently from the cash handling apparatus 100.

The cash handling apparatus 100 can detect a viewing state of the customer who is viewing the advertisement (B3). Detection of the viewing state is performed using a sensor unit 106. For example, as shown in FIG. 1, a camera installed near the operation/display unit 102 is used as the sensor unit 106. The type and number of sensor units 106 are not particularly limited. For example, the sensor unit 106 may be a visible light camera or an infrared camera. Instead of or in addition to the camera, a sensor such as a TOF (Time of Flight) sensor may be used as the sensor unit 106.

The cash handling apparatus 100 can change the service fee according to the viewing state of the customer. That is, the cash handling apparatus 100 can change the amount of reduction in the service fee according to the viewing state of the customer. For example, when the cash handling apparatus 100 has determined that the customer is not viewing the advertisement, from the viewing state of the customer detected by the sensor unit 106 during playback of the advertisement, the cash handling apparatus 100 changes the amount of reduction in the service fee by the preset method. The service fee may be changed based on the viewing state of the customer after the playback of the advertisement is finished.

The cash handling apparatus 100 can perform a viewing leading process for leading the customer to view the advertisement. For example, the cash handling apparatus 100, which has determined that the customer is not viewing the advertisement, displays information that urges the customer to view the advertisement, on the operation/display unit 102. For another example, the cash handling apparatus 100 pauses the advertisement being played, and resumes playback of the advertisement on condition that the customer has performed a predetermined operation with the operation/display unit 102. That is, the advertisement may be played only while the customer is viewing the screen of the operation/display unit 102. The viewing leading process will be described in detail later.

The cash handling apparatus 100 reduces the service fee according to the advertisement selected by the customer on condition that the customer has viewed the selected advertisement. The cash handling apparatus 100 issues a coupon 360 from the coupon issuance unit 160, and issues a receipt 370 from a receipt issuance unit 170 (A2). For example, a coupon amount given to the coupon 360 is an amount obtained by subtracting the reduced service fee from the deposit amount of the coins 310. On the receipt 370, information on the coins 310 deposited by the customer and information on the coupon 360 are printed. The information printed on the receipt 370 includes the deposit amount of the coins 310, the service fee, and the coupon amount, for example. The customer receives the coupon 360 and the receipt 370, thereby ending the deposit transaction of issuing the coupon 360 in exchange for the coins 310.

The customer can use the coupon 360 to pay for part of or the full price of an item that he/she purchases in the store. For example, if the price of the item that the customer purchases in the store, i.e., the transaction amount, exceeds the coupon amount, the customer can use the coupon 360 to pay for part of the transaction amount, and use cash or electronic settlement to pay for the remaining amount obtained by subtracting the coupon amount from the transaction amount. Transactions with coupons have been conventionally known. The transaction, in which the coupon 360 is used for payment of the transaction amount, may be performed in the conventional manner.

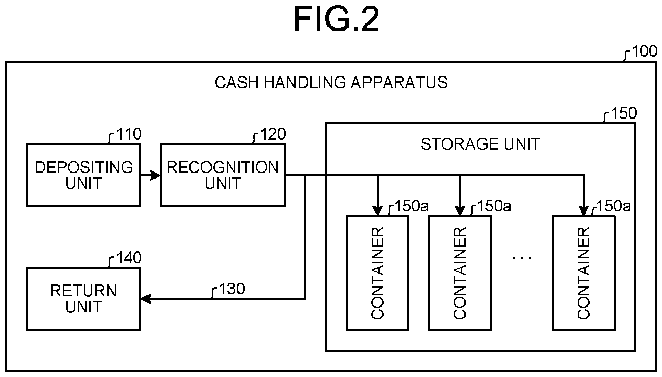

FIG. 2 is a schematic cross-sectional view illustrating an example of an internal configuration of the cash handling apparatus 100. The cash handling apparatus 100 includes the depositing unit 110, a recognition unit 120, a transport unit 130, the return unit 140, and a storage unit 150. The depositing unit 110 can accept a plurality of coins simultaneously from the customer, and feed out the coins, one by one, to a transport path. The transport unit 130 transports the coins between the depositing unit 110, the recognition unit 120, the return unit 140, and the storage unit 150, as shown by arrows in FIG. 2. The recognition unit 120 recognizes the denomination of each coin being transported by the transport unit 130. Based on the recognition result, coins that cannot be recognized are returned to the customer from the return unit 140, while recognized coins are transported to the storage unit 150. The storage unit 150 includes containers 150a. The coins transported by the transport unit 130 are stored in the containers 150a. The number of the containers 150a is not particularly limited. Some or all of the containers 150a may be dismountably mounted or fixed to the storage unit 150. Each container 150a may be a bag-like container or a cassette type container. FIG. 2 is merely an example, and does not limit the configuration of the cash handling apparatus 100 and the cash handling method of the present disclosure. The configuration of the cash handling apparatus 100 and the cash handling method are not particularly limited as long as cash can be handled as described in the present embodiment.

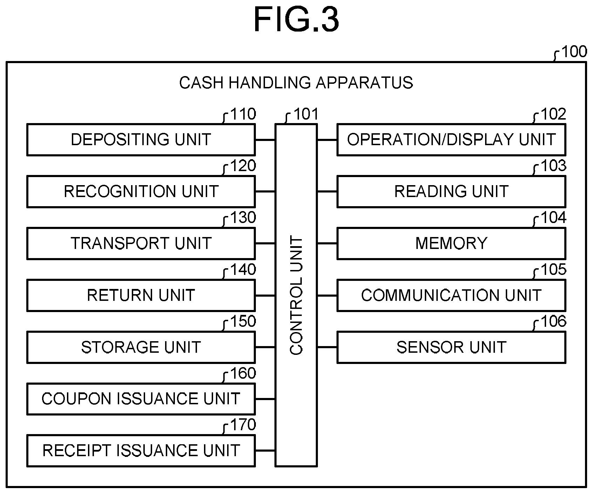

FIG. 3 is a block diagram showing an example of the configuration of the cash handling apparatus 100. The cash handling apparatus 100 includes a control unit 101, an operation/display unit 102, a reading unit 103, a memory 104, a communication unit 105, a sensor unit 106, a coupon issuance unit 160, and a receipt issuance unit 170, in addition to the components 110 to 150 shown in FIG. 2.

The operation/display unit 102 includes a touch-panel type liquid crystal display. The operation/display unit 102 functions as an operation unit that accepts inputs of various kinds of information from the customer, and functions as a display unit that displays various kinds of information to the customer. The operation/display unit 102 may be separated into an operation unit and a display unit. Advertisements to be provided to customers can be played by using the operation/display unit 102. The operation/display unit 102 includes a speaker. When the advertisement is a moving image including sound, the sound is reproduced from the speaker.

The reading unit 103 is a reading device that reads information from various kinds of media. For example, when the store issues a member card for a store member, who has registered information such as name, address, date of birth, and gender, in order to provide the store member with a predetermined service, the member card is read by the reading unit 103. A reading device corresponding to a type of a member card is used as the reading unit 103. For example, for a member card on which a barcode is printed, a barcode reader may be used as the reading unit 103. For a member card having a memory element such as an IC chip, a card reader compatible with the memory element may be used as the reading unit 103. The customer holds the member card over the reading unit 103 disposed on the front surface of the cash handling apparatus 100 as shown in FIG. 1., and the cash handling apparatus 100 reads information from the member card. For example, upon confirming that the customer is a store member of the store, the cash handling apparatus 100 sets a service set for store members, which is cheaper than that for general customers other than store members. The cash handling apparatus 100 can change the type of the advertisement to be provided to the customer, based on the store member information. For example, the cash handling apparatus 100 changes the type of the advertisement to be provided to the customer, according to the store member information such as the age and gender of the customer.

The memory 104 is a non-volatile memory device used for storing various kinds of information necessary for operation of the cash handling apparatus 100. The information stored in the memory 104 includes data of advertisements to be provided to the customers and settings for showing the advertisements to the customers. For example, settings indicating correspondence between the ages and genders of the customers, and the types of advertisements to be provided to the customers are prepared in the memory 104 in advance. The cash handling apparatus 100 changes the type of the advertisement to be provided to the customer, based on the age and gender of the customer obtained from the store member information and on the settings prepared in the memory 104. The advertisement data and the setting data may not necessarily be stored in the memory 104 of the cash handling apparatus 100. The advertisement data may be stored in an external device, and the cash handling apparatus 100 may acquire necessary data from the external device to use that in the apparatus.

The communication unit 105 is used for communicating with external devices. For example, the cash handling apparatus 100 may read the membership number from the member card with the reading unit 103, and query information on the member, based on the membership number, from an external device that manages store member information for each membership number. If the advertisement data and/or the setting data are stored in the external device, the cash handling apparatus 100 acquires necessary data from the external device via the communication unit 105.

The sensor unit 106 is used for detecting the viewing state of the customer who is viewing the advertisement displayed on the operation/display unit 102. For example, the sensor unit 106 is disposed near the operation/display unit 102 of the cash handling apparatus 100 as shown in FIG. 1. The type and number of sensor units 106 provided in the cash handling apparatus 100 are not particularly limited. For example, a visible light camera, an infrared camera, a motion sensor, a TOF sensor, or the like may be used as the sensor unit 106. The cash handling apparatus 100 may use the sensor unit 106, which is installed separately from the apparatus 100, on a wall, ceiling, or the like near the apparatus 100. The cash handling apparatus 100 analyzes information on the customer detected by the sensor unit 106, to specify the orientation of the customer's face, the motion of the customer's face, the orientation of the customer's line-of-sight, the movement of the line-of-sight, etc. Based on the specified customer information, the cash handling apparatus 100 can determine whether or not the customer is viewing the advertisement displayed on the operation/display unit 102. A conventionally known analysis technique may be used to specify the orientation and motion of the customer's face, the orientation and the movement of the line-of-sight, etc.

The coupon issuance unit 160 includes a printer to issue a coupon 360 on which predetermined information is printed. The receipt issuance unit 170 also includes a printer to issue a receipt 370 on which predetermined information is printed. The coupon issuance unit 160 may also have the function of the receipt issuance unit 170, and issue both the receipt 370 and the coupon 360. The content to be printed on the receipt 370 may be printed on the coupon 360, and only the coupon 360 may be issued without issuing the receipt 370. Alternatively, the content to be printed on the coupon 360 may be printed on the receipt 370 to issue only the receipt 370.

The control unit 101 controls the respective components constituting the cash handling apparatus 100. For example, a program corresponding to the control unit 101 is stored in advance, in the memory 104 or a dedicated memory device. This program is executed by hardware such as a CPU to realize the function and operation of the control unit 101. The control unit 101 can control the cash handling apparatus 100, based on information input/output through the operation/display unit 102, information transmitted/received through the communication unit 105, and information stored in the memory 104. Thus, the function and operation of the cash handling system 1 described in the present embodiment are realized. In the present embodiment, the function and operation of the cash handling apparatus 100 realized under control of the control unit 101 are sometimes described simply as the function and operation of the cash handling apparatus 100.

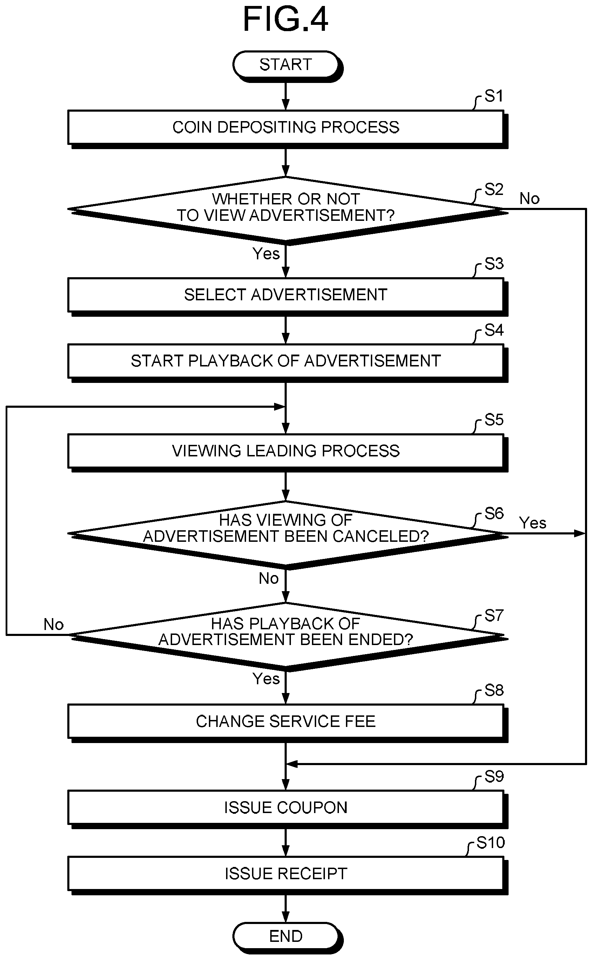

FIG. 4 is a flowchart showing an example of a flow of a process performed by the cash handling apparatus 100. The cash handling apparatus 100 performs a depositing process for coins accepted in the depositing unit 110, based on an operation performed on the operation/display unit 102 (step S1). For example, when the customer puts coins in the depositing unit 110 and presses a button on the operation/display unit 102 to start counting of the coins, the cash handling apparatus 100 starts the depositing process of the coins. The customer, who is a member of the store, holds the member card over the reading unit 103 before starting the depositing process. If the customer is a member of the store, the cash handling is performed with the service fee for store members.

The cash handling apparatus 100 having finished the depositing process accepts, from the customer, a selection as to whether or not to view an advertisement in order to reduce the service fee (step S2). When the customer has selected to view an advertisement (step S2; Yes), the cash handling apparatus 100 accepts a selection of a type of an advertisement to be played (step S4).

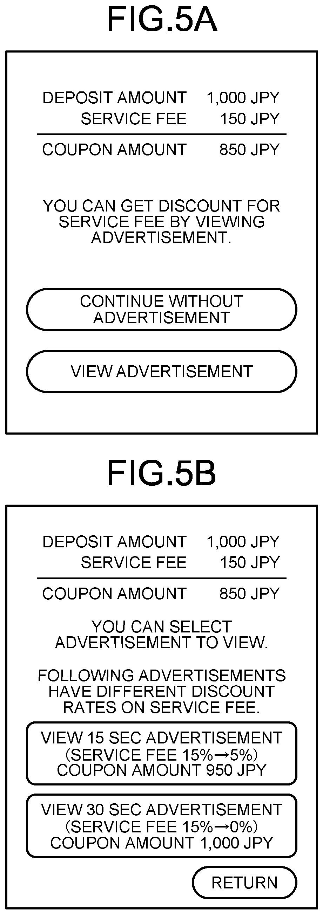

FIGS. 5A and 5B show an example of a selection screen displayed on the operation/display unit 102 of the cash handling apparatus 100. For example, the selection screen shown in FIG. 5A is displayed after completing the depositing process. Information indicating that the service fee will be reduced if the customer views an advertisement, and a button for selecting whether or not to view an advertisement, are displayed on the selection screen. The information displayed on the screen may include at least one of : the deposit amount of coins obtained through the depositing process; the service fee in the case where the customer does not view an advertisement; the coupon amount obtained by subtracting the service fee from the deposit amount; and the like.

When the customer has selected to view an advertisement, the cash handling apparatus 100 displays a selection screen shown in FIG. 5B, on the operation/display unit 102. Information indicating that the customer can select an advertisement from among a plurality of advertisements, and buttons for selecting the advertisements, are displayed on the selection screen. If the plurality of advertisements include advertisements having different service-fee reduction methods, information indicating the same may be displayed on the selection screen. The information displayed on the selection screen may include at least one of: a reduction percentage or a reduction amount of the service fee by viewing an advertisement; the service fee after reduction; information on comparison between the service fees before and after reduction; the coupon amount after reduction in the service fee; information on comparison between the coupon amounts before and after reduction in the service fee; and the like.

When the customer has selected not to view an advertisement on the selection screen shown in FIG. 5A (FIG. 4, step S2; No), the service fee is not reduced. The cash handling apparatus 100 causes the coupon issuance unit 160 to issue a coupon whose coupon amount is obtained by subtracting the normal service fee from the deposit amount (step S9). The cash handling apparatus 100 causes the receipt issuance unit 170 to issue a receipt on which the transaction content is printed (step S10) to end the process.

When the customer has selected to view an advertisement on the selection screen shown in FIG. 5A (FIG. 4, step S2; Yes), the cash handling apparatus 100 displays the selection screen shown in FIG. 5B to accept a selection of the type of an advertisement that the customer views. The cash handling apparatus 100 starts playback of the advertisement selected by the customer on the operation/display unit 102 (step S4).

For example, if the customer has selected to view a 15-second advertisement on the selection screen shown in FIG. 5B, the cash handling apparatus 100 selects an advertisement, of which playback period is 15 seconds, from among the plurality of advertisements stored in the memory 104, and plays the selected advertisement. The cash handling apparatus 100 can select an advertisement to be played, based on attribute information of the customer such as age and gender. For example, if the customer is a member of the store, the cash handling apparatus 100 can select an advertisement based on the age and gender included in the store member information, and play the advertisement, from among 15-second advertisements prepared in the memory 104. If the customer is not a member of the store, the cash handling apparatus 100 may estimate the age and gender of the customer from his/her appearance taken by a camera included in the sensor unit 106, and select an advertisement based on the result of the estimation.

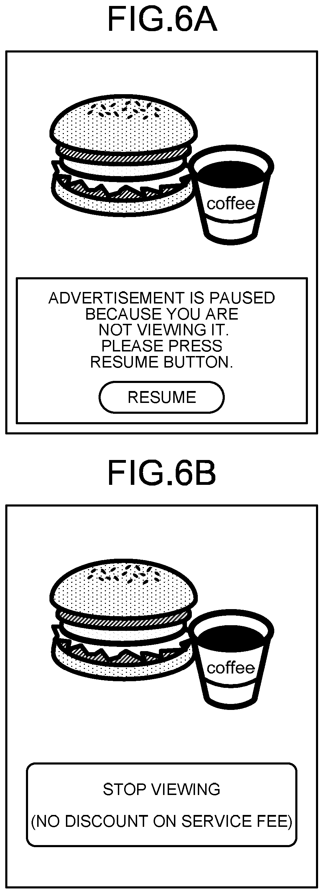

The cash handling apparatus 100 having started playback of the advertisement performs a viewing leading process for causing the customer to view an advertisement (FIG. 4, step S5). The viewing leading process is a process of leading the customer to view the advertisement being currently played on the operation/display unit 102. FIGS. 6A and 6B show an example of screens displayed on the operation/display unit 102 during the viewing leading process.

The cash handling apparatus 100 detects the motion and the line-of-sight of the customer with the sensor unit 106 to determine whether or not the customer is viewing the advertisement. For example, if a state, in which the line-of-sight of the customer deviates from the operation/display unit 102, continues for a predetermined time, it is determined that the customer is not viewing the advertisement. For example, if a state, in which the customer faces a direction different from the direction toward the operation/display unit 102, continues for a predetermined time, it is determined that the customer is not viewing the advertisement. For example, if a state, in which the customer is a predetermined distance or more away from the operation/display unit 102, continues for a predetermined time, it is determined that the customer is not viewing the advertisement.

Upon determining that the customer is not viewing the advertisement, the cash handling apparatus 100 pauses playback of the advertisement and displays a screen that urges the customer to view the advertisement, as shown in FIG. 6A. Information indicating that it is determined that the customer is not viewing the advertisement, information indicating that playback of the advertisement is paused, and information instructing the customer to perform a predetermined operation for resuming playback of the advertisement, etc., are displayed on the screen. If the customer who has confirmed the screen presses a resume button displayed on the screen, the cash handling apparatus 100 resumes playback of the advertisement that has been paused. At this time, the paused advertisement may be replayed again from the beginning. After displaying the screen shown in FIG. 6A, if the resume button is not pressed even when a predetermined time has elapsed, the cash handling apparatus 100 may generate a predetermined alarm sound to make the customer aware of the paused playback of the advertisement.

In the cash handling apparatus 100, during playback of the advertisement, i.e., during execution of the viewing leading process, a cancel button for stopping viewing of the advertisement is displayed on the operation/display unit 102 as shown in FIG. 6B. The cancel button may be displayed with information indicating that the service fee is not reduced when the button is operated. The customer can stop playback of the advertisement in the middle, by pressing the cancel button (FIG. 4, step S6; Yes). In this case, the service fee is not reduced and therefore, a coupon is issued with the normal service fee (step S9), and a receipt is issued (step S10) to end the process. For example, if the customer needs to leave the cash handling apparatus 100 after having started to view the advertisement, the customer can cancel viewing of the advertisement in the middle of the playback.

If the customer does not press the cancel button to stop viewing of the advertisement in the middle (step S6; No), playback of the advertisement is continued. Until the end of playback of the advertisement (step S7; No), the viewing leading process is continued.

When playback of the advertisement has ended (step S7; Yes), the cash handling apparatus 100 changes the service fee according to the advertisement that the customer has viewed (step S8). The service fee is discounted by a preset reduction method corresponding to the type of the advertisement that the customer has viewed. The cash handling apparatus 100 issues a coupon to which the reduced service fee is applied (step S9). The cash handling apparatus 100 issues a receipt (step S10) to end the process.

In the example shown in FIG. 5B, the customer who has selected and viewed a 15-second advertisement receives a discount for the service fee from 15% to 5% of the deposit amount. In the case where the deposit amount of coins is 1,000 JPY, the coupon amount is 850 JPY if the normal service fee is applied. However, the customer having viewed the 15-second advertisement can get a discount for the service fee, and receive a coupon to which a coupon amount equivalent to 950 JPY is assigned. The service fee becomes free for the customer who has selected and viewed a 30-second advertisement and therefore, the customer can receive a coupon to which a coupon amount of 1,000 JPY equivalent to the deposit amount is assigned.

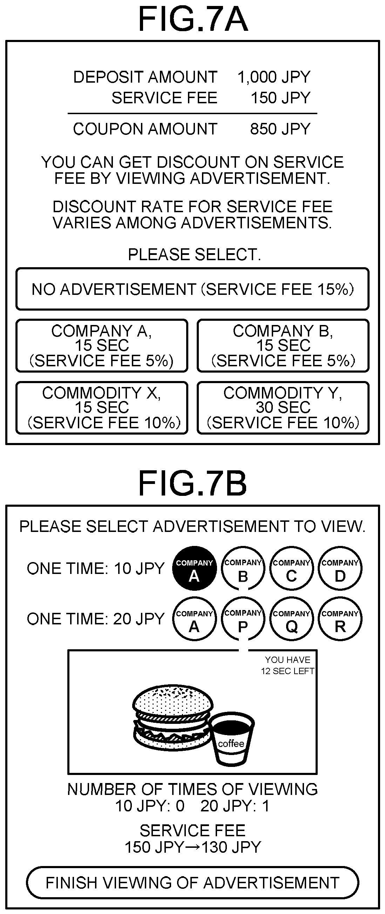

FIGS. 7A and 7B show another example of the advertisement selection screen. In the above example, after a selection has been performed on the selection screen as to whether or not to view an advertisement as shown in FIG. 5A, a selection screen for selecting the type of an advertisement is displayed as shown in FIG. 5B. However, as shown in FIG. 7A, a selection as to whether or not to view an advertisement and a selection of the type of an advertisement may be performed on a single selection screen.

In the example shown in FIG. 5B, an advertisement is selected from among advertisements having different playback times. However, the cash handling apparatus 100 may include, as options, a plurality of advertisements of different companies as shown in a selection screen shown in FIG. 7A. In addition, the cash handling apparatus 100 may include, as options, a plurality of advertisements of different items.

The cash handling apparatus 100 displays, as options, a plurality of advertisements prepared in the memory 104 in advance. If the customer is a member of the store and the attribute of the customer can be specified based on the information read from the member card by the reading unit 103, the cash handling apparatus 100 displays the selection screen based on the attribute of the customer. For example, if the plurality of advertisements prepared in the memory 104 are classified based on the attributes such as ages and genders, the cash handling apparatus 100 displays the selection screen having, as options, advertisements corresponding to the age and gender of the customer. All the advertisements may be displayed as options, and the order of the advertisements displayed on the selection screen may be changed according to the attribute of the customer. For example, when the plurality of advertisements are listed vertically on the selection screen, the advertisements corresponding to the age and gender of the customer may be displayed above the other advertisements.

In the above example, the cash handling apparatus 100, which has displayed the selection screen and received a selection by the customer, displays the selected advertisement over the entire screen of the operation/display unit 102. However, the advertisement may be displayed on a portion of the screen of the operation/display unit 102. Furthermore, in the above example, the customer selects and views one advertisement. However, the customer may select a plurality of advertisements and view the selected advertisements in order, and the service fee may be reduced according to the types and number of the viewed advertisements.

For example, the cash handling apparatus 100 may display a screen that allows the customer to select the type of an advertisement and view the selected advertisement on the same screen, as shown in FIG. 7B. In the example shown in FIG. 7B, options of the advertisement types, a moving image of the selected advertisement, and the advertisement viewing result are displayed on the same screen. When the customer has selected an advertisement from the options displayed on an upper part of the screen, a moving image of the selected advertisement is played in a portion at the substantially center of the screen. The advertisement viewing result displayed on a lower part of the screen includes: the advertisement types that have been viewed by the customer; the number of times of viewing for each advertisement type; and the service fee after reduction.

The example shown in FIG. 7B indicates that, among a plurality of types of advertisements including advertisements of different sponsor companies and advertisements having different service fee reduction amounts, the customer has selected an advertisement of company A that offers a reduction in service fee by 10 JPY, and therefore, the advertisement of company A is being played in the substantially center part of the screen. On the screen, the advertisement being played is accompanied by a remaining play time. The viewing result in the lower part of the screen indicates that the customer has already viewed, one time, an advertisement that offers a reduction in service fee by 20 JPY, and the normal service fee of 150 JPY has already been reduced to 130 JPY. When the playback of the advertisement, of which the remaining play time is 12 seconds as shown in the advertisement playback area, is finished, the viewing result in the lower part of the screen is updated such that the number of times of viewing of the advertisement offering a 10 JPY reduction is increased by one, and the service fee after reduction is changed from 130 JPY to 120 JPY. Thereafter, if the customer selects still another advertisement from the options in the upper part of the screen, the selected advertisement is played, and the viewing result in the lower part of the screen is updated again. If the customer presses an end button of advertisement viewing displayed on the screen, the cash handling apparatus 100 reduces the service fee, based on the viewing result on the screen, and issues a coupon as described above.

Although the case where the service fee for cash handling is reduced has been described, a reduction in the service fee may be realized by increasing the coupon amount while indicating the same service fee. For example, in the state where the deposit amount is 1,000 JPY, the service fee is 150 JPY, and the coupon amount is 850 JPY as shown in FIG. 5A, if the service fee is reduced by 50 JPY because the customer has viewed the corresponding advertisement, the reduction amount may be added to the coupon amount to increase the coupon amount to 900 JPY while maintaining the service fee at 150 JPY.

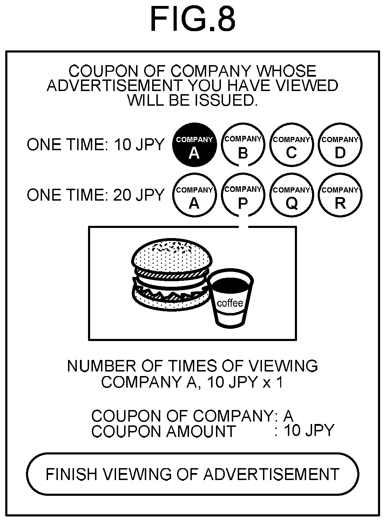

The reduction amount of the service fee due to viewing of an advertisement may be issued as a coupon different from the coupon that can be used in the store. For example, as shown in FIG. 8, the cash handling apparatus 100 displays a screen indicating that the reduction amount of the service fee is issued as another coupon. On the upper part of the screen, a plurality of types of advertisements of different companies are displayed as options. A customer who wants a coupon of company A may select and view an advertisement of company A, and a customer who wants a coupon of company B may select and view an advertisement of company B. If the customer presses an end button of advertisement viewing on the screen shown in FIG. 8, the cash handling apparatus 100 issues a plurality of coupons from the coupon issuance unit 160. The issued coupons include: a coupon which is usable in the store and to which a coupon amount obtained by subtracting the normal service fee from the deposit amount of coins is given; and a coupon of the company of which the advertisement has been selected and viewed by the customer, and to which a coupon amount equivalent to the reduction amount of the service fee is given.

For example, in the case where the deposit amount is 1,000 JPY, the service fee is 150 JPY, and the coupon amount is 850 JPY as shown in FIG. 5A, when the service fee is reduced by 50 JPY because the customer has viewed the advertisement of company A, a store coupon equivalent to 850 JPY and a company A coupon equivalent to 50 JPY are issued. In other words, a coupon that is equivalent to an amount obtained by subtracting the normal service fee from the deposit amount, and is usable in the store where the cash handling apparatus 100 is installed, and a coupon that is equivalent to the reduction amount of the service fee, and is usable in the store of the company of which the advertisement has been selected and viewed by the customer, are issued. For example, a customer, who has deposited coins into the cash handling apparatus 100 installed in a retail store selling items and has viewed an advertisement of a fast-food shop, receives a coupon usable in the retail store and a coupon usable in the fast-food shop.

In the cash handling apparatus 100, an upper limit may be set on the reduction amount of the service fee. A store that desires to reduce the burden of the service fee may set an upper limit for the reduction amount on the service fee. Alternatively, if the store intends to attract customers, the store may set the reduction amount to an upper-limit amount exceeding the service fee.

In FIGS. 6A and 6B, the viewing leading process is performed after the cash handling apparatus 100 has started playback of the advertisement. However, the viewing leading process may be performed before starting playback of the advertisement. For example, the cash handling apparatus 100 may detect that the customer wears earphones or a headset from the image captured by the camera of the sensor unit 106, and may display, on the operation/display unit 102, information that urges the customer to take off the earphones or the headset. After confirming, from the image captured by the sensor unit 106, that the customer has taken off the earphones or the headset, the cash handling apparatus 100 may start playback of the advertisement.

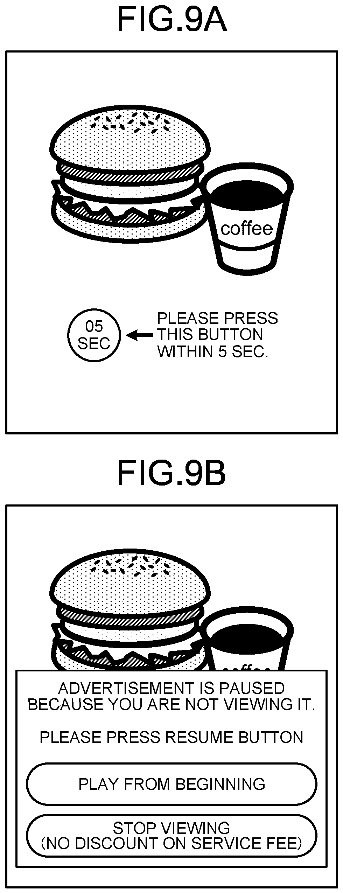

The viewing leading process may include a process not using the sensor unit 106. FIGS. 9A and 9B illustrate another example of the viewing leading process. For example, as shown in FIG. 9A, the cash handling apparatus 100 displays a button on the screen at an unpredictable timing (random timing) during playback of an advertisement. If the customer presses the button within a countdown period displayed together with the button, playback of the advertisement is continued without pause.

On the other hand, if the customer has not pressed the button within the countdown period, the cash handling apparatus 100 pauses playback of the advertisement. At this time, the cash handling apparatus 100 may reproduce voice that urges the customer to view the advertisement. For example, a message such as "The service fee will not be reduced unless you view the advertisement. Please press the button displayed on the screen." may be announced by voice. If the customer presses the button on the screen on which playback of the advertisement has been paused, playback of the advertisement is resumed.

The cash handling apparatus 100, which has paused playback of the advertisement because the customer did not press the button within the countdown period, may display a selection screen shown in FIG. 9B to allow the customer to select whether he/she will view the advertisement again from the beginning, or he/she will stop viewing the advertisement to continue the transaction without the reduction in the service fee. If the customer has selected to view the advertisement again from the beginning, the cash handling apparatus 100 may play the advertisement again from the beginning. If the customer has selected to cancel viewing of the advertisement, the cash handling apparatus 100 may issue a coupon and a receipt without reducing the service fee, to end the process.

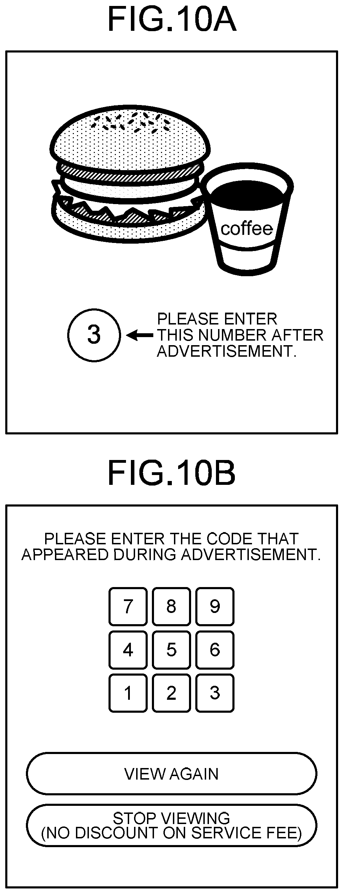

FIGS. 10A and 10B illustrate still another example of the viewing leading process. For example, before starting playback of the advertisement, the cash handling apparatus 100 notifies the customer that a code will be displayed during playback of the advertisement, and that the customer cannot receive a reduction in the service fee unless this code is entered after the playback of the advertisement has ended. The cash handling apparatus 100 may display the information to be notified to the customer on the operation/display unit 102, and accept an operation of the customer approving the displayed content.

The cash handling apparatus 100 having started playback of the advertisement displays a code on the screen of the operation/display unit 102 during the playback as shown in FIG. 10A. The cash handling apparatus 100 determines the content of the code and display timing of the code at random.

The cash handling apparatus 100 having finished the playback of the advertisement displays the screen shown in FIG. 10B that asks the customer to enter the code displayed during playback of the advertisement. When the customer has entered the correct code, the service fee is reduced according to the advertisement that the customer has viewed, as described above.

As shown in FIG. 10B, for a customer who does not know the code, a button for selecting whether he/she will view the advertisement again from the beginning, or will stop viewing the advertisement to continue the transaction without the reduction in the service fee, is displayed on the screen. If the customer has selected to view the advertisement again from the beginning, the cash handling apparatus 100 may play the advertisement again from the beginning, display a code during the playback, and ask the customer to enter the code. If the customer has selected to cancel viewing of the advertisement, the cash handling apparatus 100 may issue a coupon and a receipt without reducing the service fee, to end the process.

In the present embodiment, the customer's selection operation regarding the advertisement is performed after the cash handling has ended, but the customer's selection operation may be performed before or during the cash handling. For example, the cash handling apparatus 100 having started the cash handling may display the selection screen as shown in FIGS. 5A and 5B, FIGS. 7A and 7B, or FIG. 8 from which information regarding the cash handling is excluded, in parallel with the cash handling, thereby advancing the processes as described above. In the example shown in FIG. 4, the cash handling apparatus 100 may perform the process in step S1 in parallel with the processes in steps S2 to S7, and after finishing these processes, the cash handling apparatus 100 may perform the processes in step S8 and subsequent steps.

In the present embodiment, the cash handling apparatus 100 accepts, from the customer, a selection as to whether or not to view an advertisement and a selection of the type of an advertisement to view. However, viewing an advertisement may be mandatory, and the cash handling apparatus 100 may receive, from the customer, only a selection of the type of the advertisement to view. In the example shown in FIG. 4, the process in step S2 may be omitted.

In the present embodiment, options respectively corresponding to a plurality of types of advertisements are displayed on the selection screen to accept an advertisement selection operation. However, such a selection operation on the selection screen may be performed by inputting information. In the above described example, when the customer is caused to select either a 15-second advertisement or a 30-second advertisement, the selection operation is accepted by the selection screen having two options, i.e., 15 sec and 30 sec., as shown in FIG. 5B. This selection may not necessarily be performed through pressing any of the buttons provided corresponding to the respective options shown in FIG. 5B. For example, information on the options may be displayed on the selection screen, and a selection may be performed by accepting an information input. Specifically, numbers of seconds being set as options may be displayed on the selection screen, and an input of numerical values indicating a number of seconds may be accepted as a selection. Alternatively, the options may be indicated by numbers, and an input of a number may be accepted as a selection. The selection operation performed on the selection screen includes such a selection by information input. Also, as for the selection screen for selecting whether or not to view an advertisement and the selection screen for selecting any of advertisements of different companies or items, selection by using the selection screen may be performed through the buttons corresponding to the options, or by inputting information corresponding to an option.

In the present embodiment, the service fee of cash handling to be paid by the customer is reduced on condition that the customer views an advertisement. However, the service fee may be reduced on condition that the customer answers a questionnaire. The cash handling apparatus 100 may display an option of "questionnaire" instead of or in addition to the options of the advertisement types, on the selection screen for selecting an advertisement type. When the option of "questionnaire" has been selected, a questionnaire screen may be displayed to accept an answer to the questionnaire. For example, options may be prepared such that the service fee reduction amount is varied according to the number of questions included in the questionnaire. The service fee reduction process based on the answer to the questionnaire may be performed in the same manner as that for advertisements.

In the present embodiment, the cash handling system 1 is composed of the cash handling apparatus 100, however, the cash handling system 1 may be composed of a plurality of apparatuses, such as a cash handling apparatus, a coupon handling apparatus, and an advertisement display apparatus. The pieces of information displayed on the screen of the operation/display unit 102 are merely examples, and the screen may not include some of them or may include other information not shown in the examples.

Although the embodiment of the cash handling system 1 has been described with reference to the drawings, the configuration and operation of the cash handling system 1 are not limited to the above embodiment. Various improvements, changes, and corrections may be made based on the knowledge of those of ordinary skill in the art, without departing from the purpose of the above description.

The cash handling system and the cash handling method according to the present disclosure are useful for making an advertisement to be shown to a customer for the purpose of reducing a cash handling service fee, aligning with a request of the customer.

## Claims

1. A cash handling system (1) for performing cash handling for a customer with a service fee charged to the customer, the system comprising:
a display unit (102) configured to display a selection screen for selecting an advertisement from among a plurality of types of advertisements;
an operation unit (102) configured to accept a selection operation performed by the customer on the selection screen; and
a control unit (101) configured to reduce the service fee for the cash handling according to an advertisement selected based on the selection operation.

2. The cash handling system (1) according to claim 1, wherein
the advertisements that the display unit (102) displays on the selection screen include advertisements having different playback periods, and
the control unit (101) reduces, from the service fee, a monetary amount according to the playback period of the advertisement selected on the selection screen.

3. The cash handling system (1) according to claim 2, wherein
the advertisements that the display unit (102) displays on the selection screen include advertisements of different companies.

4. The cash handling system (1) according to any one of claims 1 to 3, wherein
the control unit (101) reduces the service fee by issuing a coupon usable for payment for an item price equivalent to reduction of the service fee.

5. The cash handling system (1) according to claim 4, wherein
the coupon is a coupon usable for purchase of an item of a company selected on the selection screen.

6. The cash handling system (1) according to any one of claims 1 to 3, wherein
the control unit (101) determines whether or not the customer is viewing an advertisement being played, and changes an amount of reduction in the service fee, based on a result of determination.

7. The cash handling system (1) according to claim 6, wherein
the control unit (101) stops playback of the advertisement upon determining that the customer is not viewing the advertisement being played.

8. The cash handling system (1) according to any one of claims 1 to 3, wherein
the control unit (101) changes the types of advertisements to be displayed on the selection screen, based on information on an attribute of the customer who views the advertisements.

9. A cash handling method performed by a cash handling system (1) for performing cash handling for a customer with a service fee charged to the customer, the method comprising:
displaying, on a display unit (102), a selection screen for selecting an advertisement from among a plurality of types of advertisements;
accepting, via an operation unit (102), a selection operation performed by the customer on the selection screen; and
reducing the service fee for the cash handling according to an advertisement selected based on the selection operation.

10. The cash handling method according to claim 9, wherein
the advertisements that the display unit (102) displays on the selection screen include advertisements having different playback periods, and
a monetary amount according to the playback period of the advertisement selected on the selection screen is reduced from the service fee.

11. The cash handling method according to claim 10, wherein
the advertisements that the display unit (102) displays on the selection screen include advertisements of different companies.

12. The cash handling method according to claim 9, wherein
the service fee is reduced by issuing a coupon usable for payment for an item price equivalent to reduction of the service fee.

13. The cash handling method according to claim 12, wherein
the coupon is a coupon usable for purchase of an item of a company selected on the selection screen.

14. The cash handling method according to claim 9, further comprising:
determining whether or not the customer is viewing an advertisement being played; and
changing an amount of reduction in the service fee, based on a result of determination.

15. The cash handling method according to claim 14, further comprising:
stopping playback of the advertisement upon determining that the customer is not viewing the advertisement being played.
